# EUROPEAN PATENT APPLICATION

(11) **EP 2 645 357 A1**
(43) Date of publication of application: **02.10.2013**
(21) Application number: 12162045.4
(22) Date of filing: 29.03.2012
(51) Int. Cl.: G09G 3/288, G09G 3/20, G09G 3/00, H04N 13/04

(54) **Display apparatus and driving method thereof**

(71) Applicant: Samsung Electronics Co., Ltd., Suwon-si, Gyeonggi-do, 443-742 (KR)
(72) Inventor: Park, Tae-soon, Gyeonggi-do (KR)
(74) Representative: Fearnside, Andrew Simon

(57) **Abstract**

A display apparatus is provided. A display apparatus includes a display panel which displays a 3D image with a left-eye image frame including a plurality of subfields and a right-eye image frame including a plurality of subfields, a driving unit which drives the display panel and a control unit which controls the driving unit to drive remaining subfields in advance as much as a subfield section of a plurality of subfields which are unused when an image having a grayscale level less than a predetermined value is being displayed.

## Description

### PRIORITY

This application claims priority under 35 U.S.C. § 119(a) from Korean Patent Application No. 10-2011-0116540, which was filed on November 9, 2011, in the Korean Intellectual Property Office, the entire disclosure of which is incorporated herein by reference.

### BACKGROUND

### 1. Field

The exemplary embodiments relate to a display apparatus and a driving method thereof, and more specifically to a display apparatus using a Plasma Display Panel (PDP) and a driving method thereof.

### 2. Description of the Related Art

Recently, technology for flat-panel display apparatuses such as a Liquid Cristal Display (LCD), a Field Emission Display (FED) and a Plasma Display Panel (PDP) has been developing rapidly. Among flat-panel display apparatuses, a Plasma Display Panel (PDP) boasts a higher luminance, a greater luminous efficacy and a wider viewing angle than other display devices. Therefore, a PDP is widely considered as a replacement for the conventional Cathode Ray Tube (CRT) in the market of large display apparatuses having a screen larger than 40 inches.

A plasma display panel has a phosphor layer within a discharge cell divided by barrier ribs and a plurality of electrodes.

If a driving signal is supplied to electrodes of a PDP, a discharge occurs within the discharge cell due to the supplied driving signal. Herein, when the discharge cell is discharged by the driving signal, discharge gases deposited inside of the discharge cell create Vacuum Ultraviolet rays. Then the Vacuum Ultraviolet rays lead a phosphor formed inside of the discharge cell to emit light, creating visible light. Because of the visible light, an image can be displayed on a screen of a PDP.

A display apparatus using a PDP is mechanically configured with the combination of a panel and a driving unit. A panel is manufactured in a way that an upper glass composed of X and Y electrodes and a bottom glass composed of Address electrodes and a discharge cell are glued together by a difference of atmospheric pressures. The driving unit is composed of an X-electrode driving unit, a Y-electrode driving unit and an address driving unit, and is driven by a waveform composed of a reset period, an address period (AP) and a sustain period (SP).

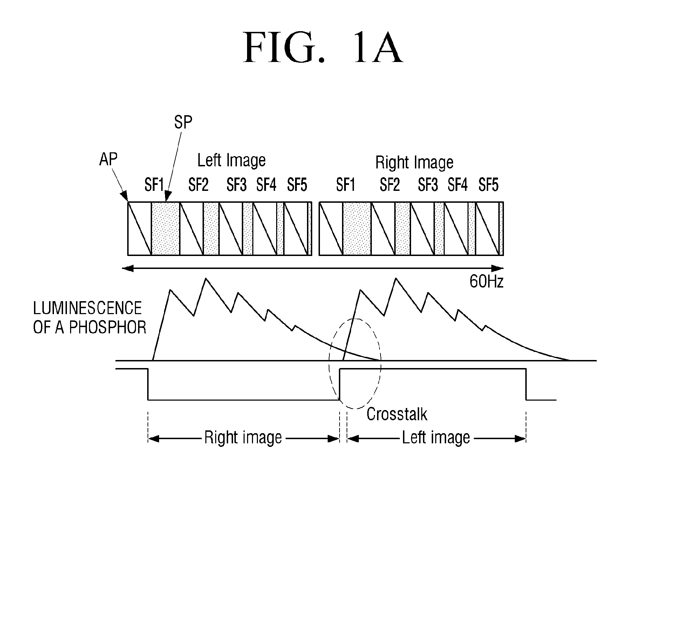

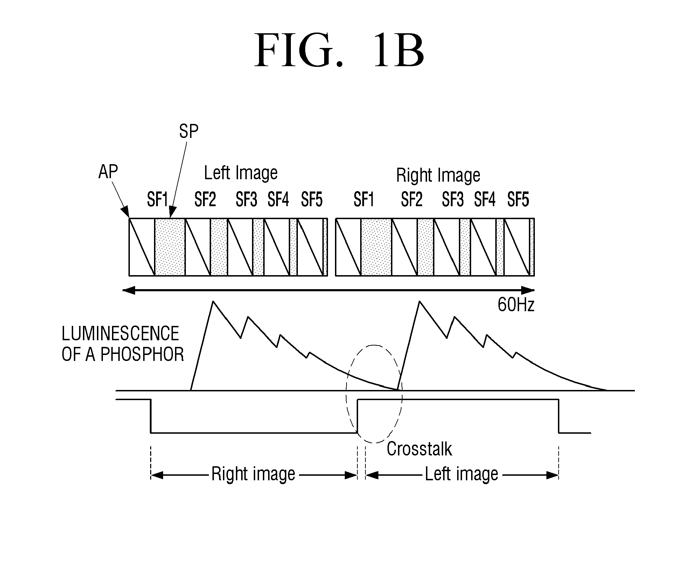

Meanwhile, according to a conventional method for driving a display apparatus using a PDP to display a 3D image, all subfields (SF1∼SF5) comprising left-eye and right-eye image frames are used when displaying an image having a grayscale level above 128 as illustrated in FIG. 1.

However, when displaying an image having a grayscale level less than 128, the sustain period does not begin at SF1, but begins at SF2 among subfields (SF1∼SF5) comprising the left-eye and right-eye image frames.

In this case, if a sustain period of subfield SF5 comprising the left-eye image frame ends, it leads to crosstalk in which some of lights created during the sustain period inflow into the right-eye image frame, thereby mixing the images.

### SUMMARY

Accordingly, the exemplary embodiments address the above-mentioned disadvantages occurring in the prior art and other related disadvantages not described above. The exemplary embodiments relate to a display apparatus which controls an electrode-driving signal applied to a panel such that crosstalk can be reduced and a driving method thereof.

According to the present invention there is provided an apparatus and method as set forth in the appended claims. Other features of the invention will be apparent from the dependent claims, and the description which follows.

According to an aspect of an exemplary embodiment, provided is a display apparatus that includes a display panel which displays a 3D image with a left-eye image frame including a plurality subfields and a right-eye image frame including a plurality of subfields, a driving unit which drives the display panel and a control unit which controls the driving unit to drive remaining subfields in advance of a second 3D image as much as a subfield section of the plurality of subfields which is unused when an image having a grayscale level less than a predetermined value is being displayed.

The control unit may apply a sustain pulse to the remaining subfields in advance of the second 3D image as much as the unused subfield section when the image having a grayscale level less than a predetermined value is received.

In addition, the control unit may drive remaining subfields in advance of the second 3D image as much as a first subfield section of the plurality of subfields which is unused when an image having a grayscale level less than a predetermined value is being displayed.

The display apparatus may further include a sync signal processing unit which generates left-eye and right-eye sync signals corresponding to a timing for driving the left-eye and right-eye frames, respectively, and transmits the sync signals to external 3D glasses.

The predetermined grayscale level may be 128.

The display panel may be a Plasma Display Panel (PDP).

A method for driving a display apparatus including a display panel which displays a 3D image with a left-eye image frame including a plurality of subfields and a right-eye image frame including a plurality of subfields includes receiving a 3D image and driving remaining subfields in advance of a second 3D image as much as a subfield section of a plurality of subfields, comprising the left-eye and right-eye image frames, respectively, which are unused when an image having a grayscale level less than a predetermined value is being displayed.

The driving a display apparatus may include applying a sustain pulse to the remaining subfields in advance of the second 3D image as much as the unused subfield section when the image having a grayscale level less than a predetermined value is received.

The driving a display apparatus may include driving remaining subfields in advance of the second 3D image as much as a first subfield section of the plurality of subfields which are unused when an image having a grayscale level less than a predetermined value is being displayed.

The method for driving a display apparatus may further include generating left-eye and right-eye sync signals corresponding to a timing for driving the left-eye and right-eye frames, respectively, and transmitting the sync signals to external 3D glasses.

The predetermined grayscale level may be 128.

The display panel may be a Plasma Display Panel (PDP).

A recording medium stores a program to perform a method for driving a display apparatus including a display panel that displays a 3D image with a left-eye image frame including a plurality of subfields and a right-eye image frame including a plurality of subfields and the driving a display apparatus includes receiving a 3D image and driving remaining subfields in advance of a second 3D image as much as a subfield section of a plurality of subfields, comprising the left-eye and right-eye image frames, respectively, which are unused when an image having a grayscale level less than a predetermined value is being displayed.

Herein, the driving a display apparatus may include applying a sustain pulse to the remaining subfields in advance of the second 3D image as much as the unused subfield section when the image having a grayscale level less than a predetermined value is received.

The driving a display apparatus may include driving remaining subfields in advance of the second 3D image as much as a first subfield section of the plurality of subfields which are unused when an image having a grayscale level less than a predetermined value is being displayed.

Accordingly, crosstalk occurring when displaying a 3D image can be reduced.

### BRIEF DESCRIPTION OF THE DRAWINGS

The above and other features, aspects and advantages of the exemplary embodiments will be more apparent from the following detailed description taken in conjunction with the accompanying drawings, in which:
FIGS. 1A and 1B are views to explain problems caused by the prior art.
FIG. 2 is a perspective view to explain a display panel according to an aspect of an exemplary embodiment.
FIGS. 3A and 3B are block diagrams to explain configuration of a display apparatus according to an aspect of an exemplary embodiment.
FIG. 4 is a view to explain a configuration of a display apparatus according to an aspect of an exemplary embodiment.
FIG. 5 is a view to explain an example of a configuration of a frame to display a stereoscopic image according to an aspect of an exemplary embodiment.
FIG. 6 is a flowchart to explain a method for driving a display apparatus according to an aspect of an exemplary embodiment.

### DETAILED DESCRIPTION OF THE EXEMPLARY EMBODIMENTS

Hereinafter, exemplary embodiments will be described in greater detail with reference to the accompanying drawings, in which aspects of the exemplary embodiments are illustrated.

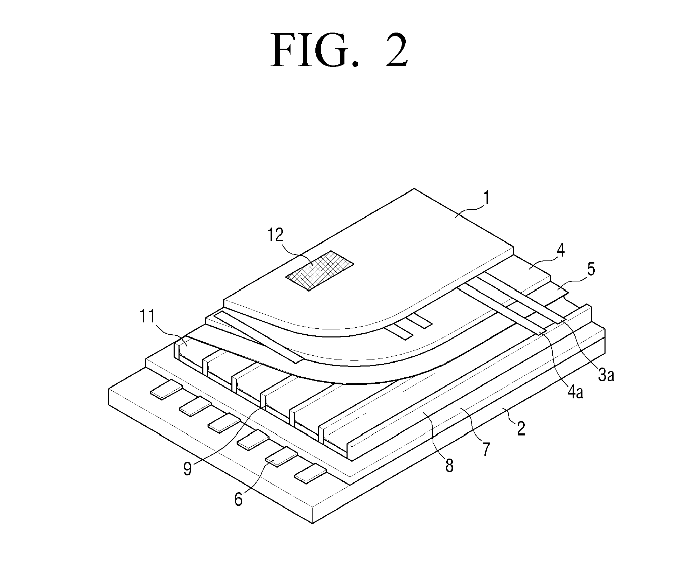

FIG. 2 is a perspective view to explain a display panel according to an aspect of an exemplary embodiment.

A display panel illustrated in FIG. 2 may be a self-emissive display panel such as a Plasma Display Panel (PDP), a Surface-conduction Electron-emitter Display (SED), a Field Emission Display (FED), and the like. Hereinafter, exemplary embodiments with a display panel realized as a PDP will be provided.

As illustrated in FIG. 2, a PDP includes two insulating substrates 1, 2 which are located separately and face each other.

At the bottom of the insulating substrate 1, a plurality of scan electrodes 3a are paired with a plurality of sustain electrodes 3b, and both of the scan electrode 3a and the sustain electrode 3b are covered with a dielectric layer 4 and a protective layer 5.

A barrier rib 8 is formed on an insulating layer 7 located between two address electrodes 6. A phosphor 9 is formed on both of a barrier rib 8 and a surface of the insulating layer 7.

The insulating substrates 1, 2 are placed between a discharge space 11 and face each other so that the sustain electrode 3b and the address electrode 6 cross each other at right angles.

A discharge space located at which the address electrode 6 and a pair of the scan and sustain electrodes 3a and 3b cross each other forms a discharge cell 12.

Herein, a wall electric charge refers to an electric charge which is formed on a wall of a cell (ex. a dielectric layer) to be closer to each electrode and is deposited in an electrode. Even though a wall electric charge is not actually in contact with an electrode, it is herein described as a wall electric charge which is "formed", "deposited" or "piled up" on an electrode. In addition, a wall voltage refers to a potential difference formed on a wall of a discharge cell by a wall electric charge.

A barrier rib forms a discharge space and prevents a dysfunction of a close pixel (ex. a cross talk) by blocking lights created when a discharge occurs. A plurality of the structural units are formed on a substrate in the form of a matrix, a pixel is formed by applying a phosphor to each structural unit, and a group of the pixels consists of a PDP.

A commonly-used PDP realizes a color of choice by causing a discharge inside of each pixel and letting Ultraviolet rays created by the discharge excite a phosphor applied on the inside-walls of the pixel.

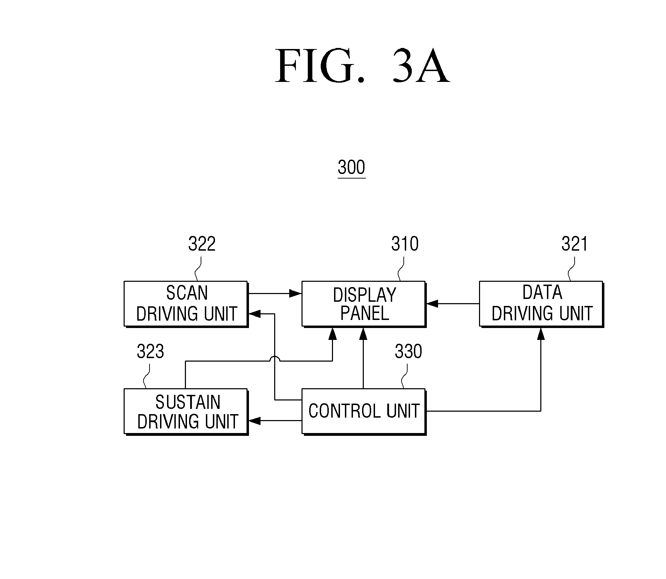

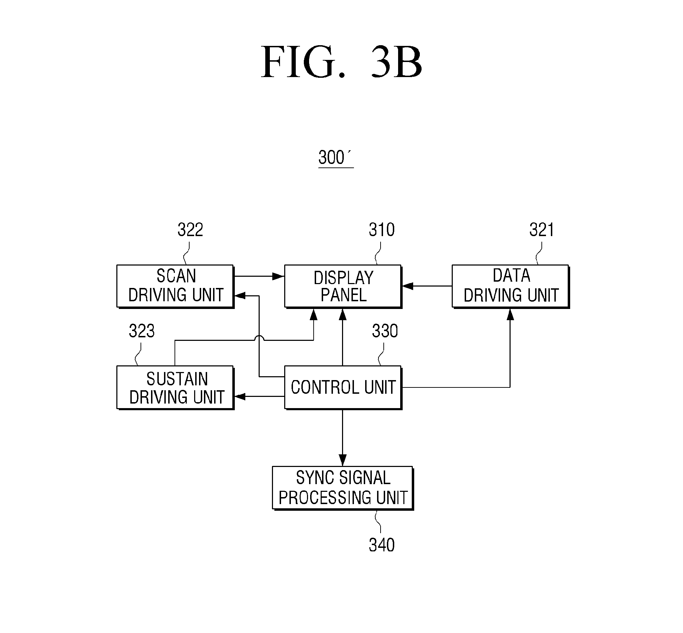

FIGS. 3A and 3B are block diagrams to explain configuration of a display apparatus according to an exemplary embodiment.

Referring to FIG. 3A, a display apparatus 300 according to exemplary embodiments includes a display panel 310, a data driving unit 321, a scan driving unit 322, a sustain driving unit 323 and a control unit 330.

The display panel 310 may be a PDP with scan electrodes, sustain electrodes and address electrodes. Herein, on the PDP, the scan and sustain electrodes may be arranged alternatively as a pair and the address electrodes may be arranged to cross the scan and sustain electrodes.

The display panel 310 may display an image with an image frame including a plurality of subfields.

The driving units 321, 322, and 323 drive the display panel 310.

Herein, the driving units 321, 322, and 323 may include the data driving unit 321, the scan driving unit 322 and the address driving unit 323 as illustrated.

The data driving unit 321 may supply a driving signal such as a data signal to address electrodes (A1∼Am) of the display panel 310.

Specifically, the data driving unit may include an inverse gamma correction circuit, an error diffusion circuit and a subfield mapping circuit (not illustrated), and after inverse gamma correction and error diffusion are done due to this configuration, a mapped data may be supplied to each subfield. The data driving unit 321 samples and ratchets a data in response to a data timing control signal (CTRX) from a timing controller (not illustrated) and supply the data to address electrodes (A1∼Am).

The scan driving unit 322 may supply a driving signal such as a scan signal to scan electrodes (Y1∼Yn) of the display panel 310.

Specifically, under the control of the control unit 330, the scan driving unit 322 supplies the number of subfields corresponding to every grayscale level or a length of a sustain period (or a sustain pulse with an adjusted width) to scan electrodes (Y1∼Yn) according to a grayscale level of a subfield during a sustain period.

The scan driving unit 322 may supply a scan pulse SP of a scan voltage Vy to scan electrodes (Y1∼Yn) in order and supply the sustain pulse to scan electrodes (Y1∼Yn) during a sustain period.

The sustain driving unit 323 may supply a driving signal such as a sustain signal to sustain electrodes (X1∼Xn) of the display panel 310.

Specifically, under the control of the time controller (Not illustrated), the sustain driving unit 323 supplies a certain level of bias voltage to sustain electrodes (X1∼Xn) during generation of a ramp-down waveform and an address period, and supplies the number of subfields corresponding to every grayscale level or a length of a sustain period ( a sustain pulse with an adjusted width) operating alternatively along with the scan driving unit 322 according to a grayscale level of a subfield during a sustain period.

The timing controller (not illustrated) may supply a certain timing control signal to the data driving unit 321, the scan driving unit 322 and the sustain driving unit 323 in order to control a timing of each driving signal.

The control unit 330 controls the scan driving unit 322 or the sustain driving unit 323 by generating a certain control signal to control an operating timing and a synchronization of the scan driving unit 322 and the sustain driving unit 323 during a reset period and then supplying the timing control signal to the scan driving unit 322 or the sustain driving unit 323.

In particular, the control unit 330 controls a timing to drive a plurality of subfields comprising an image frame. In addition, the control unit 330 drives remaining subfields in advance as much as a subfield section which is unused when an image having a grayscale level less than a predetermined value is being displayed. Herein, each subfield may include an address period and a sustain period, and a driving pulse may be applied to address electrodes, scan electrodes, and sustain electrodes corresponding to each period, respectively. In some cases, a subfield may further include a reset period.

The reset period may erase wall electric charges of the previous sustain discharge and set up wall electric charges to perform the next address discharge in a stable way. The address period is a period to check whether a cell on a board emits light, choosing a light-emitting cell (an addressed cell), and building up a wall electric charge on the light-emitting cell. The sustain period is a period to perform a discharge and display an image on an addressed cell by applying sustain voltage to scan and sustain electrodes alternatively.

When an image having a grayscale level less than a predetermined value is received, the control unit 330 drives remaining subfields in advance as much as a subfield section of a plurality of subfields, comprising left-eye and right-eye image frames for displaying a 3D image, which are unused when displaying an image having a grayscale level less than a predetermined number.

A driving voltage supply unit (not illustrated) which supplies driving voltage to each driving unit 321, 322, 323 may be included. The driving voltage supply unit may supply a setup voltage Vsetup, a scan common voltage Vscan-com, a scan voltage Vy, a sustain voltage Vs and a data voltage Vd. A type of the driving voltage may be variable depending on an existence of discharge gases or a structure of a discharge cell.

Referring to FIG. 3B, a display apparatus 300' according to exemplary embodiments includes a display panel 310, a data driving unit 321, a scan driving unit 322, a sustain driving unit 323, a control unit 330 and a sync signal processing unit 340. Further details about configuration of FIG. 3B overlapped with that of FIG. 3A will not be provided.

The display panel 310 may realize a 3D image with a left-eye image frame including a plurality of subfields and a right-eye image frame including a plurality of subfields.

When driving subfields corresponding to left-eye and right-eye image frames, the control unit 330 may drive remaining subfields in advance as much as a subfield section which is unused when an image having a grayscale level less than a predetermined number. Herein, the predetermined grayscale level may be, but is not limited to, 127.

The control unit 330 may advance the timing for driving a remaining subfield (or the timing for applying a sustain pulse) as much as a subfield section which is not applied with a sustain pulse when an image having a grayscale level less than 128 is being displayed.

For instance, if five subfields comprise left-eye and right-eye image frames, respectively, the control unit 330 may drive four remaining subfields in advance as much as a first subfield which is unused when displaying an image having a grayscale level less than 128.

The control unit 330 may calculate a level of Automatic Power Control (APC) which is variable depending on a received image and output a sustain pulse corresponding to the calculated level of APC.

In some cases, the control unit 330 may vary a grayscale level by adjusting the number of sustain signals supplied during a sustain period.

The sync signal processing unit 340 generates a sync signal, which controls a left-eye shutter glass and a right-eye shutter glass of 3D glasses to open alternatively corresponding to the timing for displaying left-eye and right eye image frames, respectively, and transmits the sync signal to 3D glasses (not illustrated). The purpose of this process is to control the left-eye and right eye shutter glasses of the 3D glasses to open alternatively to thus display a left-eye image on the display panel 310 when the left-eye glass of 3D glasses opens and display a right-eye image on the display panel when the right-eye glass of 3D glasses opens by controlling the left-eye and right-eye shutter glasses to open alternatively. Herein, the sync signal may be transmitted in the form of infrared rays, but the form is not limited to infrared rays.

As described above, driving remaining subfields in advance as much as a subfield section which is unused when an image having a grayscale level less than a predetermined value is being displayed may reduce crosstalk caused by an inflow of lights which are emitted by driving a last subfield.

Even though the above-described exemplary embodiments are provided relating only to shutter glasses, the technical aspects of the exemplary embodiments may be applied to passive glasses.

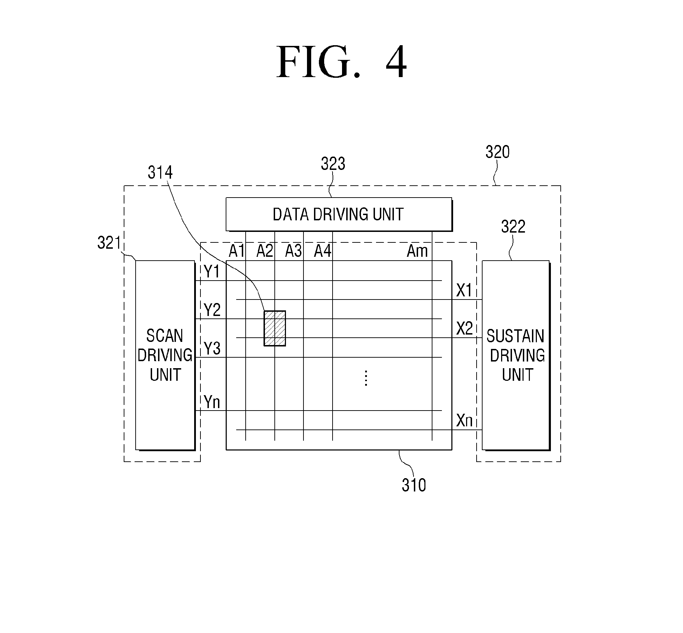

FIG. 4 is a view to explain a display apparatus according to an exemplary embodiment.

A display panel 310 includes a plurality data electrodes (A1-Am) arranged in a row and a plurality of scan electrodes and sustain electrodes arranged in a line. The sustain electrodes (X1-Xn) are formed corresponding to the scan electrodes (Y1-Yn), and the groups of the electrodes are commonly connected with each other. The display panel 310 comprises a glass substrate (not illustrate) with X and Y electrodes arranged and a glass substrate with address electrodes (A1-Am) arranged. The two glass substrates are arranged between a discharge space which face each other so that Y address electrodes (Y1-Yn) and address electrodes (A1-Am), or X electrodes (X1-Xn) and address electrodes (A1-Am) cross each other at right angles. In this case, the discharge space, located where address electrodes (A1-Am), Y electrodes (Y1-Yn) and X electrodes (X1-Xn) cross each other, forms a discharge cell 314. The display panel 310 may be realized as a Plasma Display Panel (PDP).

The display apparatus 300 may include a chassis base supporting the display panel 310 and a plurality of Printed Circuit Boards (PCB) built in the chassis base and connected with the display panel 310.

Scan electrodes, sustain electrodes and address electrodes may be connected with relevant PCBs via a Flexible Printed Circuit (FPC), respectively.

For instance, a plurality of PCBs may include a scan board controlling Y electrodes, a sustain board controlling X electrodes, and an address board controlling address electrodes.

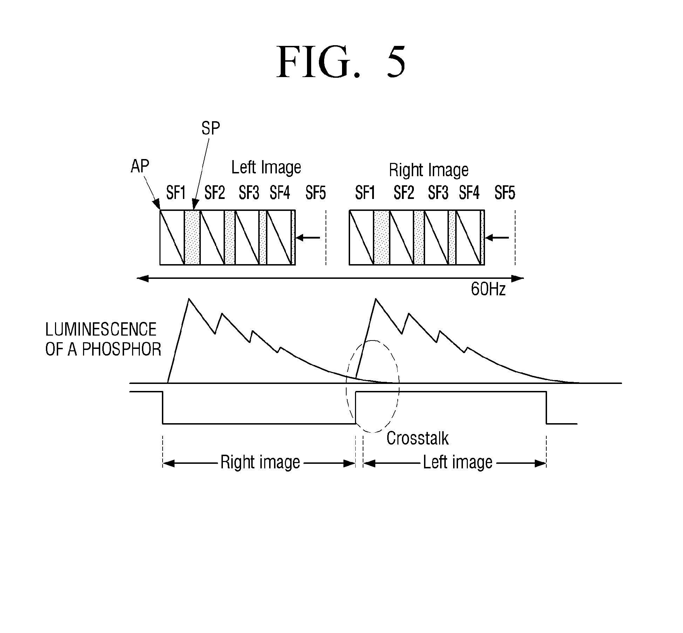

FIG. 5 is a view to explain a configuration of a frame which realizes a stereoscopic image according to exemplary embodiments.

According to FIG. 5, left-eye and right-eye frames which realize a grayscale level of a stereoscopic image may include a plurality of subfields.

FIG. 5 illustrates a case where five subfields comprise left-eye and right-eye image frames, respectively, however, it is just exemplary and the number of subfields may be variable. In addition, it will be appreciated by those skilled in the art that the order in which left-eye and right eye image frames are arranged may change.

Subfields may include an address period (AP) to select whether a discharge will or will not occur in a discharge cell and a sustain period (SP) to realize a grayscale level depending on the number of discharges.

For instance, in order to realize an image having a grayscale level less than 128, each left-eye and right-eye image frame may be composed of five subfields (SF1-SF5) and each subfields may include an address period and a sustain period.

At least one of a plurality of subfields of each frame may include a reset period for initialization. Further, a first subfield of every frame may include a reset period during which a reset signal is supplied to scan electrodes.

According to the exemplary embodiments, it is possible to drive remaining subfields in advance as much as a subfield section (SF1) which is unused when an image having a grayscale level less than 128 is being displayed. Accordingly, as illustrated, crosstalk can be reduced compared to FIG. 1B.

Meanwhile, even though FIG. 5 illustrates a case where five subfields comprise left-eye and right-eye image frames, respectively, the number of subfields is not limited to be five, and the left-eye image frame and the right-eye image frame may have a different number of subfields.

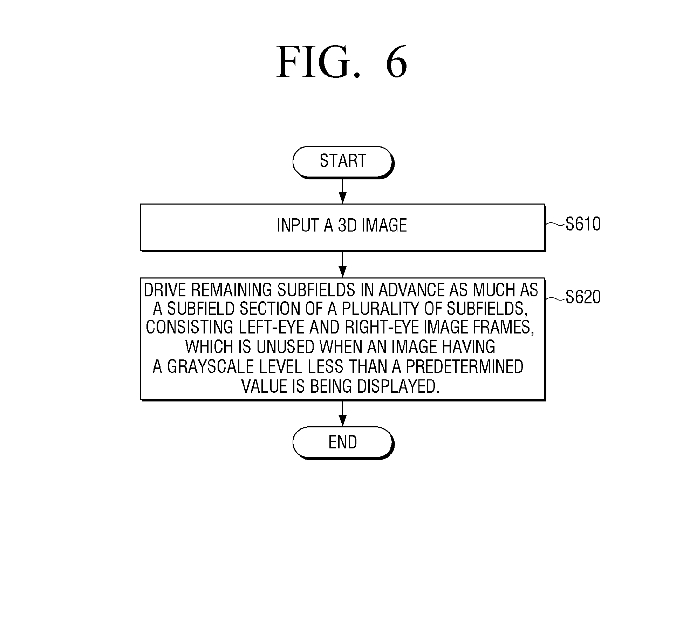

FIG. 6 is a flowchart to explain a method for driving a display apparatus according to an exemplary embodiment.

According to a method for driving a display apparatus including a display panel which displays a 3D image with a left-eye image frame including a plurality of subfields and a right-eye image frame including a plurality of subfields as illustrated in FIG. 6, if a 3D image is received (S61 0), remaining subfields are driven in advance as much as a subfield section of a plurality of subfields comprising left-eye and right-eye image frames, respectively, which are unused when an image having a grayscale level less than a predetermined value is being displayed (S620). Herein, the predetermined grayscale level may be 128, but it is not limited to 128. In addition, the display panel may be a Plasma Display Panel.

Meanwhile, a plurality of subfields comprising left-eye and right-eye image frames, respectively, are generally all used, so, in the exemplary embodiments, only when an image having a grayscale level less than a predetermined value is being displayed, it is possible to apply a sustain pulse to remaining subfields in advance as much as an unused subfield section.

Specifically, it is possible to drive remaining subfields in advance as much as a first subfield section of a plurality of subfields which are unused when an image having a grayscale level less than a predetermined value is being displayed.

In addition, it is possible to generate a left-eye sync signal and a right-eye sync signal corresponding to the timing for driving left-eye and right eye frames, respectively, and transmit the signals to external 3D glasses.

According to another aspect of an exemplary embodiment, a storage medium, or a computer-readable recording medium, which includes a program to perform the method for driving a display apparatus according to exemplary embodiments may be included. A computer-readable recording medium includes all kinds of recording apparatuses that can be readable by a computer system. Examples of computer-readable recording mediums include a ROM, a RAM, a CD-ROM, a magnetic tape, a floppy Disc and an optical data storage device. Computer-readable recording mediums are decentralized in a computer system connected by a network, and they may store and perform a code which a computer can read in a decentralized way.

As described above, according to the exemplary embodiments, crosstalk occurring when displaying a 3D image can be reduced.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus, comprising:
a display panel which displays a 3D image with a left-eye image frame including a plurality subfields and a right-eye image frame including a plurality of subfields;
a driving unit which drives the display panel; and
a control unit which controls the driving unit to drive remaining subfields in advance of a second 3D image as much as a subfield section of the plurality of subfields which is unused when an image having a grayscale level less than a predetermined value is being displayed.

2. The display apparatus as claimed in claim 1, wherein the control unit applies a sustain pulse to the remaining subfields in advance of the second 3D image as much as the unused subfield section when the image having a grayscale level less than a predetermined value is received.

3. The display apparatus as claimed in any one of claims 1 or 2, further comprising:
a sync signal processing unit which generates left-eye and right-eye sync signals corresponding to a timing for driving the left-eye and right-eye frames, respectively, and transmits the sync signals to external 3D glasses.

4. The display apparatus as claimed in any one of claims 1 or 3, wherein the predetermined grayscale level is 128.

5. The display apparatus as claimed in any one of claims 1 or 4, wherein the display panel is a Plasma Display Panel.

6. A method for driving a display apparatus including a display panel which displays a 3D image with a left-eye image frame including a plurality of subfields and a right-eye image frame including a plurality of subfields, comprising:
receiving a 3D image; and
driving remaining subfields in advance of the second 3D image as much as a subfield section of a plurality of subfields, comprising the left-eye and right-eye image frames, respectively, which is unused when an image having a grayscale level less than a predetermined value is being displayed.

7. The method as claimed in claim 6, wherein the driving a display apparatus comprises applying a sustain pulse to the remaining subfields in advance of the second 3D image as much as the unused subfield section when the image having a grayscale level less than a predetermined value is received.

8. The method as claimed in any one of claims 6 or 7, further comprising:
generating left-eye and right-eye sync signals corresponding to a timing for driving the left-eye and right-eye frames, respectively, and transmitting the sync signals to external 3D glasses.

9. The method for driving a display apparatus as claimed in any one of claims 6 or 8, wherein the predetermined grayscale level is 128.

10. The method for driving a display apparatus as claimed in any one of claims 6 or 9, wherein the display panel is a Plasma Display Panel.

11. A recording medium which stores a program to perform a method for driving a display apparatus including a display panel that displays a 3D image with a left-eye image frame including a plurality of subfields and a right-eye image frame including a plurality of subfields, wherein the driving a display apparatus comprises:
receiving a 3D image; and
driving remaining subfields in advance of the second 3D image as much as a subfield section of a plurality of subfields, comprising the left-eye and right-eye image frames, respectively, which is unused when an image having a grayscale level less than a predetermined value is being displayed.

12. The recording medium as claimed in claim 11, wherein the driving a display apparatus comprises applying a sustain pulse to the remaining subfields in advance of the second 3D image as much as the unused subfield section when the image having a grayscale level less than a predetermined value is received.

13. A method for driving a display apparatus including a display panel which displays a 3D image with a left-eye image frame including a plurality of subfields and a right-eye image frame including a plurality of subfields, comprising:
driving a first section of a plurality of subfields of display panel which are unused when the 3D image has a grayscale level less than a predetermined value;
driving a second section of the plurality of subfields comprising remaining subfields not in the first section of the plurality of subfields;
wherein the driving the second section of the plurality of subfields occurs in advance of a timing for displaying a second 3D image, and
wherein the second section of the plurality of subfields is driven as much as the first section of a plurality of subfields.

14. The method as claimed in claim 13, wherein the driving the second section of the plurality of subfields further comprises applying a sustain pulse to the second section of the plurality of subfields when the 3D image having a grayscale level less than a predetermined value is received.
